# EUROPÄISCHE PATENTSCHRIFT

(11) **EP 3 728 725 B1**
(45) Veröffentlichungstag und Bekanntmachung des Hinweises auf die Patenterteilung: **07.05.2025**
(21) Anmeldenummer: 18808231.7
(22) Anmeldetag: 06.11.2018
(51) Int. Cl.: D06N 3/00, B32B 5/02, B32B 5/26, B32B 27/12, B32B 27/22, B32B 27/30, D06N 3/06, E04D 5/10

(54) **DICHTUNGSBAHN**
SEALING WEB
BANDE D'ÉTANCHEITÉ

(30) Priorität: 22.12.2017 DE 102017131197
(43) Veröffentlichungstag der Anmeldung: 28.10.2020
(73) Patentinhaber: BMI Group Danmark ApS, 9400 Nørresundby (DK)
(72) Erfinder: SIMONIS, Udo, 63549 Ronneburg (DE); HEVÖ, Katarina, 94603 Kolárovo (SK)
(74) Vertreter: Stoffregen, Hans-Herbert
(86) Internationale Anmeldenummer: PCT/EP2018/080342
(87) Internationale Veröffentlichungsnummer: WO 2019/120731

(56) Entgegenhaltungen:
- EP-A2- 0 116 301
- EP-A2- 2 299 021
- WO-A1-2009/138314
- WO-A1-2018/210667
- US-A- 5 422 179

## Beschreibung

Die Erfindung bezieht sich auf eine mehrschichtige Dichtungsbahn für einen Bauwerkbereich, wie Dach, Fassade, Keller, Decken, die äußere Schichten, die ein Grundpolymer in Form von Polyvinylchlorid oder ein Polyvinylchlorid-Copolymer und einen Weichmacher enthalten, sowie zwischen den äußeren Schichten vorhandene Kombinationsträgereinlage aufweist, die ein Glasvlies und eine Glasverstärkung aufweist.

Eine entsprechende Dichtungsbahn ist der WO 2009/138314 A1 zu entnehmen. Um eine gute Verarbeitbarkeit, eine hohe Kerbschlagfähigkeit bei niedrigen Temperaturen sowie eine hohe Witterungsbeständigkeit zu erzielen, ist vorgesehen, dass der Weichmacher ein Polymerweichmacher in Form eines Adipinsäurepolyester mit einem mittleren Molekulargewicht von 3.000 bis 12.000 ist. Polymere Weichmacher zeigen jedoch hinsichtlich Verarbeitbarkeit und Kosten erhebliche Nachteile.

Der EP 0 116 301 A2 ist eine Verbundbahn mit einer Kunststoffschicht zu entnehmen, die aus einer in Weich-PVC eingebetteten Verstärkungseinlage auf Basis von Glasfasern besteht.

Eine Dachbahn nach der EP 2 299 021 A2 weist ein Faservlies mit im Randbereich verlaufenden Verstärkungsfäden auf.

Gegenstand der nicht vorveröffentlichten WO 2018/210667 A1 ist eine Dichtungsbahn mit äußeren Schichten, die ein Grundpolymer und einen Weichmacher enthalten. Ferner ist eine eine Glasverstärkung enthaltende Kombinationsträgereinlage vorhanden.

Der vorliegenden Erfindung liegt die Aufgabe zugrunde, eine Dichtungsbahn der eingangs genannten Art derart weiterzubilden, dass diese kostengünstig herstellbar ist, eine hohe Dimensionsstabilität sowie ein geringes Schrumpfverhalten aufweist. Eine problemlose mechanische Befestigung soll ermöglicht werden.

Nach einem weiteren Aspekt soll die Dichtungsbahn eine überaus glatte oder leicht geprägte Oberfläche aufweisen.

Auch soll das Recyceln im Vergleich zu Bahnen, die Polyestereinlagen als Verstärkung aufweisen, besser bzw. einfacher sein.

Zur Lösung einer oder mehrere zuvor genannter Aspekte schlägt die Erfindung im Wesentlichen vor, eine mehrschichtige Dichtungsbahn für einen Bauwerkbereich, wie Dach, Fassade, Keller, Decken, die äußere Schichten, die ein Grundpolymer in Form von Polyvinylchlorid oder ein Polyvinylchlorid-Copolymer und einen Weichmacher enthalten, sowie zwischen den äußeren Schichten vorhandene Kombinationsträgereinlage aufweist, die aus einem Glasvlies und einer Maschenware besteht oder diese enthält. Die Kombinationsträgereinlage ist mit den äußeren Schichten vorzugsweise mittels eines Bindemittels verbunden, dessen Gewichtsanteil in Prozent insbesondere zwischen 5 % und 50 % beträgt, bezogen auf die Summe der Gewichte von Bindemittel und Kombinationsträgereinlage.

Als Maschenware werden üblicherweise textile Flächengebilde oder textile Raumgebilde bezeichnet, bei denen eine mittels Faden gebildete Schleife in eine andere Schleife hineingeschlungen ist. Die auf diese Weise entstehenden Maschen können unter Verwendung eines Fadens oder mehrerer Fäden gebildet werden.

Damit unterscheiden sich Maschenwaren von Geweben, bei der die Fläche durch Verkreuzen von zwei Fadensystemen hergestellt wird, und auch von Vliesen, bei denen ein loser Faserflor beispielsweise durch Wärme verfestigt wird. Maschenware zeichnet sich im Vergleich zum Gewebe durch eine höhere Dehnbarkeit, Elastizität und infolgedessen geringere Knitterbildung aus.

Bei den Maschenwaren unterscheidet man Strick- oder Wirkware - eine weitere Bezeichnung kann ebenfalls Gestricke oder Gewirke sein. Die Herstellung der Maschenwaren erfolgt dabei in Einfadentechnik (Strickwaren und Kulierwirkwaren) oder in Kettfadentechnik (Mehrfadenware als Kettenwirk- oder Kettenstrickware).

Die erfindungsgemäße Glasverstärkung besteht aus oder enthält Maschenware, wobei diese wiederum eine Kombination von Gewirken und Gestricken enthalten kann.

Insbesondere wird erfindungsgemäß die Aufgabe selbstständig gelöst durch eine mehrschichtige Dichtungsbahn für einen Bauwerkbereich, wie Dach, Fassade, Keller, Becken, die äußere Schichten, die ein Grundpolymer, wie Polyvinylchlorid oder ein Polyvinylchlorid-Copolymer, und einen niedermolekularen Weichmacher enthalten, und eine aus einem Glasvlies und einer Längs- und Querfäden - auch Kett- bzw. Schussfäden genannt - aufweisenden Maschenware enthaltenden Kombinationsträgereinlage aufweist, wobei die Längsfäden eine erste Lage und die Querfäden eine zweite Lage bilden, die Längsfäden und die Querfäden durch erste und zweite Bindefäden verbunden sind, die ihrerseits fixiert von den Längsfäden ausgehen, und wobei im Bereich der Kreuzungspunkte zwischen den Längsfäden und Querfäden die ersten Bindefäden ausschließlich oberhalb und die zweiten Bindefäden ausschließlich unterhalb der Kreuzungspunkte in deren Bereichen derart verlaufen, dass die Kreuzungspunkte zwischen den ersten und zweiten Bindefäden verlaufen.

Die Kombinationsträgereinlage kann auch als Maschenware-Vlies-Verbund, Gestricke-Vlies-Verbund, Gewirke-Vlies-Verbund bezeichnet werden.

Maschenwaren werden mittels Strickverfahren hergestellt. Dieses Verfahren kann drei verschiedene Fäden nutzen, um ein Gewebe bzw. Gitter herzustellen. Es gibt Kettfäden (Maschinenrichtung) und/oder Schussfäden sowie zumindest einen Bindefaden, welcher verwendet wird, um die Kett- und/oder Schussfäden zusammenzubinden. In einer weiteren Ausführung kann das Gewebe bzw. Gitter zusätzlich mit einem Bindemittel beschichtet sein.

Maschenwaren können uniaxial oder biaxial dargestellt und aufgebaut werden. Hierbei können bei einem biaxialen Aufbau die Kett- und Schussfäden in unterschiedlichen Winkeln dargestellt werden, bevorzugterweise 0° und 90° oder 45°.

Maschenwaren lassen sich unterscheiden in Gewirke und Gestricke. Ein Gestrick oder Gestricke wird aus einem Fadensystem, Gewirke dagegen werden aus sehr vielen Fäden parallel hergestellt. Das heißt, bei Gestricken wird eine Schlaufe in die nächste eingeschoben, bis eine Reihe entsteht. Bei Gewirken werden ganz viele Schleifen oder Schlaufen ineinandergeschoben, so dass sich eine ganze parallele Einheit bildet. Gewirke werden auch als (Ketten)wirkware oder Raschel(wirk)ware benannt.

Bei den Maschenwaren unterscheidet man Strick- oder Wirkware. Die Herstellung der Maschenwaren erfolgt dabei in Einfadentechnik (Strickwaren und Kulierwirkwaren) oder in Kettfadentechnik (Mehrfadenware als Kettenwirk- oder Kettenstrickware).

Als Maschenwaren werden diejenigen textilen Flächen bezeichnet, bei denen die Einzelfäden mit Hilfe maschenbildender Technologien zu einem dimensionsstabilen Gebilde verarbeitet werden. Der Maschenbildungsprozess selbst ist sehr komplex und relativ schwierig zu beschreiben. Prinzipiell können die Maschenwaren in die Gruppe der Einfadengewirke und -gestricke sowie in die Gruppe der Kettengewirke unterteilt werden. Wichtig ist festzuhalten, dass bei den Einfadengewirken und den Einfadengestricken durch jeweils einen Faden in Querrichtung nebeneinander liegende Maschen erzeugt werden, wohingegen bei den Kettengewirken der Faden in Längsrichtung durch das Gewirke verläuft.

Eine einzelne Masche ist das Bildungselement von Maschenwaren. Sie ist eine Fadenschleife, die ihren Halt dadurch bekommt, dass sie an vier Stellen mit weiteren Fadenschleifen verhängt ist. Maschenreihe um Maschenreihe wird die Ware aufgebaut. Mehrere nebeneinander angeordnete Maschen bilden eine Maschenreihe, mehrere übereinander angeordnete Maschen ein Maschenstäbchen.

Eine Wirkmaschine stellt Maschenware mit Hilfe eines Systems von Nadeln sowie einiger Hilfselemente her, indem sich alle Nadeln gemeinsam bewegen und aus einem oder mehreren Fäden eine Reihe Maschen gleichzeitig bilden. Maschenware aus einem Faden wird auf Kulierwirkmaschinen (auch Cottonmaschinen genannt) hergestellt, wobei zwischen Flachkulierwirkmaschinen und Rundkulierwirkmaschinen unterschieden wird. Ketten aus mehreren (bis mehr als 10.000) Fäden verarbeitet man auf Kettenwirkmaschinen. Diese werden in drei unterschiedlichen Konstruktionsarten hergestellt:
- Kettenwirkautomaten
- Raschelmaschinen
- Doppelbarige Raschelmaschine
- Häkelgalonmaschinen
- Trikotmaschinen

Wird eine Maschenware auf einer Raschelmaschine hergestellt, so spricht der Fachmann auch von Raschelware. Die Raschelmaschine oder Raschel (auch als Polkamaschine bezeichnet) ist eine spezielle Kettenwirkmaschine. Die Richtung des Warenabzugs an der Raschel (nach unten) unterscheidet sich von dem an der normalen Kettenwirkmaschine (nach oben). Die Grundkonstruktion ist von der Kettenwirkmaschine abgeleitet. Zur Raschel gehört allerdings eine Reihe von Zusatzeinrichtungen, die eine fast unbegrenzte Musterung der Maschenware ermöglichen. Wirkwerkzeuge einer Raschelmaschine mit Jacquard-Einrichtung, Maschinen sind mit Zungen- oder Schiebernadeln bestückt. Zur Grundausstattung gehören: Zwei Nadelsysteme (Einzelnadel- und Schieberbarre) mit Zungenanschlagdraht, Stech- und Abschlagkämme (Platinen), zwei Legebarren mit Lochnadeln. Die Maschinen können ausgestattet sein mit: einer mehrstelligen Anzahl Legebarren, Jacquardlegebarren und so genanntem Fallblech, Doppelbarren (für Schuss- oder Polfaden).

Erfindungsgemäß wird eine Dichtungsbahn vorgeschlagen, die mehrschichtig aufgebaut ist, wobei eine innere Schicht durch die Kombinationsträgereinlage gebildet wird. Da diese aus Glasvlies und einer Glasverstärkung bestehend aus einer oder enthaltend eine Maschenware, Gewirke und/oder Gestricke oder Kombinationen daraus, besteht, ergibt sich eine problemlose sichere mechanische Befestigung. Gleichzeitig ist eine hinreichende Dimensionsstabilität gegeben. Ein Schrumpfen durch Alterung wird im Vergleich zu bekannten Dachbahnen reduziert.

Durch den Verlauf der Bindeflächen und der Verbindung mit den Längs- bzw. Querfäden wird eine gewünschte Festigkeit erzielt bzw. sichergestellt. Gleichzeitig ergibt sich eine glatte Oberfläche.

Die Erfindung sieht des Weiteren vor, dass die Glasverstärkung mit dem Glasvlies mittels insbesondere Styrol-Butadien verbunden ist.

Es besteht aber auch die Möglichkeit, dass die Glasverstärkung mit dem Glasvlies zumindest mittels eines Bindemittels aus der Gruppe Acrylat, EVA, auf PVC basierenden Varianten, wie PVC Dispersionen, PVC Plastisole verbunden ist.

Es besteht aber auch die Möglichkeit, dass die Glasverstärkung mit dem Glasvlies mittels zumindest einer Kombination von zwei Bindemitteln aus der Gruppe aus Styrol-Butadien, Acrylat, EVA, PVC - Dispersionen oder -Plastisolen zu verbinden.

Es besteht weiterhin die Möglichkeit, dass die Glasverstärkung mit dem Glasvlies nicht verbunden ist, d.h. kein Bindemittel als Haftungsmedium Einsatz findet.

Einer der Faktoren, um die ausreichende Verbindung zwischen den einzelnen Schichten der Dachbahn zu gewährleisten, d.h. obere Außenschicht (PVC-Schicht) (Oberschicht), Kombinationsträgereinlage und untere Außenschicht (PVC-Schicht) (Unterschicht), ist die Durchdringungsfähigkeit der oberen und unteren PVC-Schichten durch die Struktur der Kombinationsträgereinlage. Es wurde beobachtet, dass die Menge und die Oberflächenverteilung des aufgebrachten Bindemittels einen Einfluss auf die Verbindungsqualität zwischen den Schichten der Dachbahn aufweist.

Insbesondere ist vorgesehen, dass die Bindemittelanteile zwischen 5 Gew.-% - 50 Gew.-%, bevorzugterweise zwischen 15 - 35 %, liegen.

Der Anteil des Bindemittels, welches auf der Verstärkung aufgebracht wird, wird mittels der Glühverlust Methode - welche in der Norm DIN EN 13820 näher beschrieben wird - nach der Produktion ermittelt.

Eine weitere mögliche Bestimmung des Bindemittelgehaltes bzw. -verteilung ist die Bewertung der Luftdurchlässigkeit der Verstärkung, d.h. der Luftstrom durch einen ausgewählten und definierten Bereich der Verstärkungsprobe und der daraus resultierende Druckabfall über die Probe. Es gibt zwei verschiedene Messmethoden, wobei in der ersten Variante der Druckabfall konstant gehalten und die Durchflussrate gemessen wird. In der zweiten Variante ist die Durchflussrate konstant und der Druckabfall wird gemessen.

Die Luftdurchlässigkeit wird in l/m²s bei einem Druck von 200 Pa gemessen. Die Werte liegen hierbei zwischen 4000 - 12 000 l/m²s, bevorzugterweise zwischen 5 000 - 8000 l/m²s.

Bevorzugterweise sollte bei der Maschenware der Bindefaden oder die Bindefäden eine Feinheit zwischen 2 tex und 20 tex, bevorzugt zwischen 4 tex und 10 tex aufweisen. Per Definition bedeutet: 1 dtex (Dezitex) = 0,1 tex oder 1 Gramm pro 10.000 Meter oder 1 tex = 10 dtex.

Eine Kombination aus Bindefaden bzw. Bindefäden und Bindemitteln ist möglich.

Der Bindefaden basiert vorzugsweise auf den nachgenannten Materialien: Polyester, Polypropylen, Polyamid und Glas.

Vergleicht man Gewebe mit Maschenware, so ergibt sich für Gewebe eine kreuzweise Verflechtung von zwei Fadengruppen (Kette, Schuss) mit unterschiedlicher Bindung - z.B Leinwandbindung (Schussfaden kreuzt genau einen Kettfaden) oder Körperbindung (Schussfaden kreuzt jeweils zwei Kettfäden). Bei Maschenwaren hingegen sind Gewirke oder Gestricke Flächengebilde aus Maschen, also aus mittels Faden gebildete Schleifen, die ineinander verschlungen sind.

Bevorzugte Gewirkestrukturen sind dem Fachmann allgemein bekannt und lassen sich unterscheiden in "Single Guide Bar" - d.h. übersetzt "Einfache Führungsschiene/-barren" - sowie ''Two guide bars" - d.h. übersetzt "Zwei Führungsschienen/-barren".Weiterhin ist dem Fachmann auch der Begriff "doppelbarrige" Wirkwaren geläufig.

Bevorzugte Stiche bzw. Maschen sind der nachgeführten Auflistung zu entnehmen:
- "Full Tricot" bzw. "Double Tricot"
- "Half Tricot"
- ''Locknit"
- ''Sharkskin"

Zur Unterscheidung der Varianten "Half Tricot" sowie "Full Tricot" ist folgende Beschreibung weiterführend:
- "Half Tricot": ist die Grundform von Kettenwirkwaren und Gewirken. Die Führungsschiene führt das Garn/den Faden/die Fäden im ersten Schritt auf eine Nadel und bewegt sich dann seitwärts, um das Garn/den Faden/die Fäden auf der benachbarten Nadel im zweiten Schritt zuzuführen. Dieser Vorgang wird entsprechend wiederholt. Alle Kettenwirkwaren/Gewirke werden in ähnlicher Weise gebildet, mit der Ausnahme, dass möglicherweise mehr Führungsschienen, mehr Wiederholungsschritte oder unterschiedliche Unterlegungen (sogenannte ''underlaps") und unterschiedliche Richtungen der Führungsschienenverschiebung (Rechts-Links; ''Shogging") vorhanden sein können.
- "Full Tricot": Diese Struktur strickt zwei "Half Tricot" zusammen mit zwei Führungsschienen, die sich in die entgegengesetzte Richtung bewegen. Dies ist eine ausgewogene Struktur, die beiden Kettfäden werden in entgegengesetzte Richtung überlappt (der sogenannte "overlap"). Dies führt zu perfekten aufrechten Schleifen in der Stoffoberfläche.

Weiterhin werden bevorzugte Maschenwaren bzw. Maschenstoffe in der Norm DIN EN ISO 8388 ''Maschenstoffe - Typbezeichnungen - Terminologie" genannt, die erfindungsgemäß zum Einsatz gelangen können.

Des Weiteren kann abweichend von vorbekannten Dichtungsbahnen in den Außenschichten als Weichmacher ein niedermolekularer Weichmacher, also ein Monomerweichmacher eingesetzt werden. Dies ist besonders zu bevorzugen. Dabei sollte der Anteil des niedermolekularen Weichmachers in den das Grundpolymer enthaltenden äußeren Schichten zwischen 25 Gew.-% bis 45 Gew.-%, insbesondere zwischen 25 Gew.-% und 37 Gew.-%, bevorzugterweise zwischen 27 Gew.-% bis 35 Gew.-%, betragen.

Ergibt sich eine hohe Dimensionsstabilität und ein geringes Schrumpfverhalten und insbesondere die gewünschte äußere glatte Struktur, wenn auf jeder Seite der Kombinationsträgereinlage nur eine äußere Schicht verläuft, so besteht auch die Möglichkeit, dass insbesondere bauwerkbereichfernliegend eine Zwischenschicht vorhanden ist, so dass sich eine Reihenfolge Außenschicht, Kombinationsträgereinlage, Zwischenschicht, Außenschicht - ausgehend von dem Bauwerk - ergibt.

Bauwerkseitig bzw. bauwerkbereichseitig verlaufende Außenschicht bedeutet, dass bei verlegter Dichtungsbahn eine Seite der Außenschicht unmittelbar dem Bauwerk zugewandt ist und entlang der anderen Seite die Kombinationsträgereinlage verläuft. Entsprechend bedeutet bauwerkfernliegende bzw. bauwerkbereichfernliegende Außenschicht, dass entlang ihrer Innenseite die Kombinationsträgereinlage verläuft.

Die Zwischenschicht weist dabei eine Zusammensetzung auf, die weitgehend der der äußeren Schichten entspricht. Unterschiede können sich bezüglich der Additive, insbesondere hinsichtlich UV-Stabilität und Farbpigmente, ergeben, wobei die Zwischenschicht geringere Additive, als die angrenzende äußere Schicht aufweisen kann.

Bevorzugterweise ist der niedermolekulare Weichmacher ein Weichmacher auf der Basis von Phthalat, insbesondere ein Weichmacher aus der Gruppe DPHP (Dipropylheptylphthalat), DINP (Diisonylphthalat), DIDP (Diisodecylphthalat). Der Weichmacher kann aber auch ein phthalatfreier Weichmacher, ein biobasierter Weichmacher oder ein teilweise biobasierter Weichmacher sein, wie sie beispielsweise in der EP 3 156 447 A beschrieben sind, deren Offenbarung Gegenstand der vorliegenden Erfindung ist. Eine Kombination der genannten Weichmacher ist in weiterer Ausgestaltung ebenfalls möglich.

Insbesondere zeichnet sich die Erfindung dadurch aus, dass jede Schicht in Gew.-% enthält oder besteht aus:

| | |
|---|---|
| niedermolekularer Weichmacher | 25- 45, insbesondere 27 - 37 |
| Prozesshilfen | 0 - 1,9, insbesondere 0,1 - 1,50 |
| Füllstoff | 0 - 20, insbesondere 0 - 15 |
| PVC | 45 - 57, insbesondere 46 - 56 |
| Antioxidantien | 0 - 0,2, insbesondere 0,1 - 0,2 |
| UV-Stabilisator | 0 - 0,23, insbesondere 0,1 - 0,23 |
| sonstige Stabilisierungsmittel | 1,5 - 1,8 |
| Farbpigmente außer TiO₂ | 0 - 0,14, insbesondere 0,005 - 0,10 |
| Titandioxid | 1,0 - 12, insbesondere 1 - 8 |
| Flammschutzadditive | 0 -20, insbesondere 0 - 12 |

Nach einer hervorzuhebenden Ausführungsform sind die sonstigen Stabilisierungssysteme bestehend aus organischen Thermostabilisatoren. Ein Einsatz solcher Stabilisatoren ergibt den Vorteil, auf ESO oder ESBO (Epoxidiertes Sojabohnenöl) als Co-Stabilisator in der Rezeptur verzichten zu können.

Die Kombinationsträgereinlage ist mit einem Binder imprägniert, mittels dessen die Verbindung zu den angrenzenden Außenschichten bzw. der Außen- und Zwischenschicht erfolgt. Dabei besteht der Binder vorzugsweise auf der Basis zumindest eines Materials aus der Gruppe Styrol-Butadien, Acrylat, EVA und PVC oder Kombination daraus. Die PVC Variante ist besonders als Dispersion oder Plastisol anzuwenden.

Insbesondere ist Styrol-Butadien als Binder hervorzuheben, der trotz Weichmacheraufnahme nachteilige Auswirkungen auf die Dachbahnen nicht zeigt, auch nicht im Bereich der Knoten der sich kreuzenden Glasfasern. Ferner ist eine besonders einfache Recycelbarkeit aufgrund des mineralischen Trägers gegenüber Polyester gegeben.

Insbesondere bei EVA, PVC, Acrylat ergibt sich auch der Vorteil, dass die Haftfestigkeit zwischen der Kombinationsträgereinlage und den angrenzenden Schichten besonders hoch ist.

Die Verwendung der Kombinationsträgereinlage als Verstärkung hat erwähntermaßen überaschenderweise dazu geführt, dass die Dichtungsbahn eine überaus glatte Oberfläche aufweist.

Ebenfalls zeigt sich durch Verwendung der genannten Kombinationsträgereinlage eine Eliminierung der Zugspannungen im Endprodukt. Dies führt weiterhin zu einer stabilen Dickentoleranz der einzelnen Schichten, was es dem Hersteller ermöglicht, engere Dickentoleranzen der einzelnen Schichten einzuhalten.

Eine besondere Festigkeit bei gleichzeitig guter Verarbeitung ergibt sich dann, wenn das Glasvlies ein Flächengewicht zwischen 20 g/m² und 90 g/m² und/oder die Glasfasern des Glasvlieses eine Dicke zwischen 10 µm und 20 µm aufweisen.

Die Verlegedichte oder Maschenweiten oder Konstruktionen der Fasern der Glasverstärkung, wie Maschenware, Gestricke, Gewirke oder Kombinationen daraus, sollte zwischen 2x2 und 6x6 liegen, wobei bevorzugt 3x3 - 4x4 zu wählen ist. 2x2 bedeutet, dass pro cm jeweils 2 Glasfäden sowohl in eine Richtung, als auch in eine Richtung quer zu dieser Richtung verlegt sind. Man spricht bei Fäden in Längsrichtung auch von Kettfäden und bei Fäden in Querrichtung dazu von Schussfäden. Entsprechendes gilt für 3x3 und 4x4 und 5x5 und 6x6.

Der Aufbau bzw. die Konstruktion bzw. Verlegedichte bzw. Maschenweite kann hierbei symmetrisch, quadratisch rechtwinklig oder asymmetrisch aufgebaut sein. Folgende Beispiele sollen die verschiedenen Aufbauten verdeutlichen:
- Ein quadratischer Aufbau beispielsweise 2x2, d.h 2 Fäden /cm in Längs- sowie in Querrichtung, d.h. 2 Kettfäden/cm und 2 Schussfäden/cm.
- Ein rechtwinkliger Aufbau wäre beispielsweise 2x1, d.h. 1 Faden/cm in Längsrichtung und 2 Fäden/cm in Querrichtung, d.h. 1 Kettfaden/cm und 2 Schussfäden/cm oder umgekehrt.
- Ein asymmetrischer Aufbau wäre beispielsweise 2x2 RV, d.h. 2 Fäden/cm in Längs- sowie in Querrichtung, wobei der Randbereich des Gitters in Querrichtung 4 anstatt 2 Fäden/cm aufweist, d.h. 2 Kettfäden/cm und 2 Schussfäden/cm, wobei im Randbereich 4 anstatt 2 Kettfäden/cm vorhanden sind.

Weiterhin können ebenfalls Kettfäden doppelt oder in mehrfacher Form angeordnet sein, wobei diese in Schussfäden entsprechend nicht die gleiche Zahl darstellen müssen.

Weiterhin können zwischen Schuss- und Kettfaden verschiedene Fadendimensionierungen verwendet werden, wie z.B. verschiedene Durchmesser oder verschiedene Stoffgruppe, z.B. Polyester und Glas, wobei mind. einer der beiden Fäden auf Glas basieren sollte.

In einer weiteren Ausführungsform ist das Glasvlies in den Rand- oder Mittelbereichen der Glasvliesbreite mit Verstärkungsfäden - vorzugsweise ebenfalls basierend auf Glasfäden oder PES (Polyester) Fäden, d.h. vor allem in Längsrichtung der Dachbahn - ausgebildet. Diese Anwendungsform ist bevorzugt für hohe Windlastbereiche, d.h. besonders in Küstengebieten und der damit höher auftretenden Kräfte bzw. Krafteinleitungspunkte in die Dachbahn anwendbar.

Der Randbereich ist auf 1 cm bis 20 cm von der Außenkante der Längsrichtung der Membran festgelegt, wobei die bevorzugte Breite bis ca. 6 cm ist. Weiterhin können so 4 bis 20 Verstärkungsfasern, bevorzugt 4 bis 10 Verstärkungsfasern, im Abstand von max. 50 mm, vorzugsweise 5 mm bis 10 mm angeordnet sein. Die Abstände werden so gewählt, dass zwischen den Befestigungstellern, welche von Schrauben oder Nägeln durchsetzt sind, um die Dachbahn auf dem Substrat bzw. Untergrund zu fixieren, und dem Substrat bzw. Untergrund mindestens 3 Verstärkungsfasern verlaufen, um die mechanische Verstärkung sicherzustellen.

Das Gesamtflächengewicht der Kombinationsträgereinlage sollte zwischen 80 g/m² und 200 g/m², bevorzugt zwischen 100 g/m² und 120 g/m², liegen.

Die Dichtungsbahn selbst sollte ein Flächengewicht zwischen 1,4 kg/m² und 2,6 kg/m², vorzugsweise zwischen 1,5 kg/m² und 1,9 kg/m², aufweisen.

Dabei ist bevorzugterweise eine Dicke der Dichtungsbahn zwischen 1,0 mm und 2,5 mm, vorzugsweise zwischen 1,2 mm und 2,0 mm, vorgesehen.

Die erfindungsgemäße Dichtungsbahn zeichnet sich insbesondere auch durch die Zugfestigkeit [N/50mm] in Längsrichtung mit mindestens 1000, vorzugsweise mindestens 1150, besonders bevorzugt mit 1150 bis 1250, und/oder in Querrichtung mit mindestens 800, vorzugsweise mindestens 1000, besonderes bevorzugt mit 1100 bis 1200 aus, gemessen gemäß EN 12311-2.

Ferner beträgt die Weiterreißfestigkeit [N] in Längsrichtung zwischen 170 und 250 und in Querrichtung zwischen 210 und 300, gemessen gemäß EN 12310-2.

Längsrichtung ist die Richtung, in der die Dichtungsbahn bei der Herstellung transportiert wird. Querrichtung ist die hierzu senkrecht verlaufende Richtung.

Um zu verhindern, dass die Verbindungspunkte der Maschenware, Gewirke und/oder Gestricke, zur Außenseite der Dichtungsbahn hin Erhebungen bilden, sieht die Erfindung bevorzugterweise vor, dass das Glasvlies entlang bauwerkseitig abgewandter Außenseite der Glasverstärkung verläuft.

Die Erfindung erfasst jedoch auch die Positionierung des Glasvlies entlang bauwerkseitig zugewandter Außenseite der Glasverstärkung.

Bei einer dem Fachmann bekannten Dachbahn, welche eine Gitterverstärkung bzw. -einlage aufweist - d.h. ohne die erfindungsgemäße Kombinationsträgereinlage - können die Verbindungspunkte an die Oberfläche der Dachbahn treten und zu einer Strukturierung der Oberfläche führen. Die bedeutet für den Fachmann auftretende Kanäle, Einsinkstellen oder Pfützen, in welchen sich vor allem Schmutz, Wasser, Algen, Insekten, u.a. ansammeln können. Durch die Wechselwirkung der aufgefangenen Substanzen bzw. Organismen mit der Dachbahn bzw. der in der Dachbahn enthaltenen Bestandteile, z.B. der Weichmacher, kann eine beschleunigte Alterung auftreten, besonders in den Randbereichen dieser können Reservoirs bzw. Kanäle entstehen, welche eine kürzere Lebenszeit bzw. Nutzdauer der Dachbahn mit sich bringen.

Dieser Effekt wird mit dem erfindungsgemäßen Einsatz der Kombinationsträgereinlage umgangen, da sich hier eine solche genannte Struktur nicht in der Oberfläche abbilden kann.

Die Verwendung einer Kombinationsträgereinlage bewirkt eine Verbesserung des Brandverhaltens der Verstärkung bzw. Einlage bzw. der Dachbahn bzw. des kompletten Dachaufbaus, welches entsprechend der CEN/TS 1187:2012 ''Beanspruchung von Bedachungen durch Feuer von außen" nachgewiesen werden kann.

Als weiteren positiven Aspekt ist die verbesserte Verschweißbarkeit der Dachbahn anzusprechen. Dies liegt besonders an der glatten und wellenfreien Beschaffenheit der Dachbahn. Bei der Verschweißung mittels Schweißautomaten wirkt dies sich entsprechend auf weniger Fehlstellen aus, d.h. Stellen, welche nachträglich händisch mittels Heißluft-Handgeräten als zusätzlicher Arbeitsaufwand ebenfalls materialhomogen verschlossen werden müssen. Dies ermöglicht eine bessere Handhabung sowie zeitoptimierte Verlegequalität der Dachbahn.

Des Weiteren ist vorgesehen, dass die Dichtungsbahn eine oder mehrere Zusätze bzw. Additive aus der Gruppe Füllstoffe, Pigmente, Farbstoffe, UV-Stabilisatoren, Thermostabilisatoren, Biozide, Flammschutzadditive enthält.

Zusätze in den Schichten sollten entsprechend der gewünschten Wirkung in ihren Anteilen unterschiedlich sein. So sollten in der Außenschicht bzw. in äußeren Schichten, die bei verlegter Dachbahn oberhalb der Kombinationsträgereinlage verlaufen, die Anteile an UV-Stabilisatoren und/oder Thermostabilisatoren und/oder Fungizide größer als in der unterhalb der Kombinationsträgereinlage verlaufenden Schicht bzw. Schichten sein.

Bevorzugterweise ist vorgesehen, dass oberhalb der Kombinationsträgereinlage ein oder zwei Schichten, die das Grundpolymer und den Monomerweichmacher enthalten, und unterhalb der Kombinationsträgereinlage, also bauwerkseitig, eine Schicht verlaufen, wobei erwähntermaßen die Anteile der Zusätze in den einzelnen Schichten variieren können.

Verfahrenstechnisch kann die erfindungstechnische Dachbahn mittels eines oder mehrerer Glättgestell(en) im (Co-)Extrusions- oder Kalandrierverfahren hergestellt werden. Die Kombinationsträgereinlage kann in einem vorgeordneten Schritt hergestellt oder als separates Glasvlies und Glasverstärkung dem Verfahren zugeführt werden.

Weitere Einzelheiten, Vorteile und Merkmale der Erfindung ergeben sich nicht nur aus den Ansprüche, den diesen zu entnehmenden Merkmalen, für sich und/oder in Kombination, sondern auch aus der nachfolgenden Beschreibung von bevorzugten Ausführungsbeispielen.

Es zeigen:
- Fig. 1: einen Abschnitt einer Dichtungsbahn,
- Fig. 2: ein Glättgestell zur Herstellung der Dichtungsbahn gemäß Fig. 1,
- Fig. 3: einen Ausschnitt aus einem Gewirke,
- Fig. 4: einen Querschnitt durch das Gewirke in Fig. 3.,
- Fig. 5: eine Kombination zweier Glättgestelle zur Herstellung der Dichtungsbahn gemäß Fig. 1,
- Fig. 6: einen Ausschnitt eines biaxialen Gestrickes,
- Fig. 7: einen Ausschnitt eines biaxialen Gewirkes,
- Fig. 8: einen Ausschnitt aus einem "Half Tricot Gewirke",
- Fig. 9: einen Ausschnitt aus einem "Full Tricot Gewirke" und
- Fig. 10: einen Ausschnitt eines Haftungsproblems basierend auf dem eingesetzten Bindemittel.

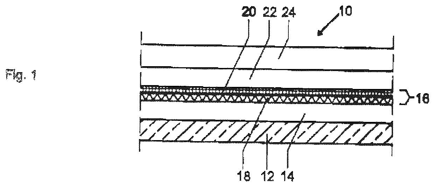

In der Fig. 1 ist im Schnitt ein Abschnitt einer erfindungsgemäßen Dichtungsbahn 10 dargestellt, die im Baubereich verwendet wird, wie z.B. zur Abdichtung von Dächern, Verkleidung von Fassaden, Auskleiden von Becken oder Auskleiden von Kellern.

Die Dichtungsbahn 10 verläuft im Ausführungsbeispiel auf einem Dach 12 und besteht aus einer unteren Schicht 14, die bei verlegter Dichtungsbahn 10 dachseitig, also bauwerkbereichseitig verläuft. Auf der unteren Schicht 14 befindet sich eine Kombinationsträgereinlage 16, die ihrerseits aus einer dachseitig verlaufenden Glasverstärkung bestehend aus einer oder enthaltend eine Maschenware 18 und dachfernliegend aus einem Glasvlies 20 besteht oder dieses enthält. Die Maschenware ist ein Gestrick, ein Gewirke oder Kombinationen dieser.

Auf der freien Seite der Kombinationsträgereinlage 16 sind sodann zwei Schichten 22, 24 angeordnet, die - wie die untere Schicht 14 -Weich-PVC (Polyvinylchlorid) und einen Monomerweichmacher sowie einen oder mehrere Additive wie Füllstoffe, Pigmente, Farbstoffe, UV-Stabilisatoren, Thermostabilisatoren und Biozide enthalten oder aus diesen bestehen. Dabei liegt der Gewichtsanteil des Monomerweichmachers in der jeweiligen Schicht 14, 22, 24 zwischen 25 Gew.-% und 40 Gew.-%, vorzugsweise zwischen 25 Gew.-% und 37 Gew.-%, insbesondere zwischen 27 Gew.-% und 35 Gew.-%.

Die Schichten 22, 24 verlaufen folglich auf der Seite der Kombinationsträgereinlage 16, die bei verlegter Dichtungsbahn 10 zu dem Dach 12 bzw. dem Bauwerk abgewandt ist.

Als Monomerweichmacher wird bevorzugterweise ein solcher auf Basis von Phthalat eingesetzt, insbesondere ein Weichmacher aus der Gruppe DPHP (Dipropylheptylphthalat) DINP (Diisonylphthalat), DIDP (Diisodecylphthalat), eingesetzt. Der Weichmacher kann aber auch ein phthalatfreier Weichmacher, ein biobasierter Weichmacher oder ein teilweise biobasierter Weichmacher sein.

Insbesondere zeichnet sich die Erfindung dadurch aus, dass jede Schicht 14, 22, 24 in Gew.-% enthält:

| | |
|---|---|
| niedermolekularer Weichmacher | 25- 45, insbesondere 27 - 37 |
| Prozesshilfen | 0 - 1,9, insbesondere 0,1 - 1,50 |
| Füllstoff | 0 - 20, insbesondere 0 - 15 |
| PVC | 45 - 57, insbesondere 46 - 56 |
| Antioxidantien | 0 - 0,2, insbesondere 0,1 - 0,2 |
| UV-Stabilisator | 0 - 0,23, insbesondere 0,1 - 0,23 |
| sonstige Stabilisierungsmittel | 1,5 - 1,8 |
| Farbpigmente außer TiO2 | 0 - 0,14, insbesondere 0,005 - 0,10 |
| Titandioxid | 1,0 - 12, insbesondere 1 - 8 |
| Flammschutzadditive | 0 - 20, insbesondere 0 - 12 |

Insbesondere ist vorgesehen, dass der Titandioxid-Anteil in der oberen Schicht 24 größer als der in der mittleren Schicht 22 ist. Der Titandioxid-Anteil der unteren Schicht 12 ist wiederum geringer als der der mittleren Schicht 22.

Ferner können sowohl die mittlere Schicht 22 als auch die untere Schicht 12 frei von Antioxidantien und Stabilisatoren einschließlich UV-Stabilisatoren sein.

Der Anteil von Calciumcarbonat kann in der unteren Schicht 14 größer als der in der mittleren Schicht 22 und dieser wiederum größer als der in einer oberen Schicht 24 sein.

Das Glasvlies 20 der Kombinationsträgereinrichtung 16 sollte ein Flächengewicht zwischen 30 g/m² und 90 g/m² aufweisen.

Die Glasfasern des Glasvlieses sollten eine Dicke zwischen 13 µm und 18 µm aufweisen. Die Glasfasern der Glasverstärkung bestehend aus einer Maschenware, einem Gestricke, einem Gewirke oder Kombinationen daraus, zeichnen sich durch ein Gewicht von 60 tex bis 80 tex aus.

Ferner sollte die Verlegedichte oder Maschenweiten oder Konstruktionen der Fasern der Glasverstärkung bestehend aus einer Maschenware, einem Gestricke, einem Gewirke oder Kombinationen daraus, 3x3 bis 4x4 betragen.

Das Flächengewicht der Dichtungsbahn 10 sollte zwischen 1,4 kg/m² und 2,6 kg/m² liegen, wobei als Dicke bevorzugterweise 1,2 mm bis 2,0 mm anzugeben ist.

Die Schicht 14 einerseits und die Schicht 22, 24 andererseits werden auf die Kombinationsträgereinlage 16 insbesondere durch Kalandrierung, Streichverfahren oder Extrusion aufgebracht.

Insbesondere ist vorgesehen, dass die Schichten 22, 24 durch Coextrusion und die Schicht 14 durch Extrusion mit einer Einkanaldüse hergestellt werden.

In einem einzigen Glättgestell - auch Kalander, Kalandereinheit oder Walzenglättwerk genannt - werden sodann die coextrudierten Schichten 22, 24 und die Schicht 14 mit der zwischen diesen verlaufenden Kombinationsträgereinlage 16 verbunden. Alle Prozessschritte werden mit einem einzigen Glättgestell abgebildet.

Glasvlies 20 und Glasverstärkung bestehend aus einer oder enthaltend eine Maschenware 18 sind mit einem Bindemittel imprägniert, das zumindest aus einem Material aus der Gruppe Styrol-Butadien, Acrylat, PVC, EVA besteht oder dieses enthält. Mittels des Bindemittels werden die Kombinationsträgereinlagen mit den angrenzenden Schichten 14, 22 verbunden.

Entsprechend hergestellte Dichtungsbahnen 10 weisen eine Zugfestigkeit in N/50mm in Längsrichtung von zumindest 1000, vorzugsweise von etwa 1150 bis 1180, und in Querrichtung von zumindest 800, vorzugsweise in etwa 1080 bis 1100, auf, wobei die Messung gemäß EN 12311-2 erfolgt.

Die Höchstzugkraftdehnung liegt in Längs- und in Querrichtung bei ca. 2 - 5 %, gleichfalls gemessen gemäß E 12311-2.

Die Weiterreißfestigkeit nach EN 12310-2 beläuft sich in Längsrichtung auf ca. 220 N und in Querrichtung auf ca. 270 N.

Die Nagelreißfestigkeit nach EN 123010-1 beläuft sich in Längsrichtung auf ca. 300 N und in Querrichtung auf ca. 375 N.

Hinsichtlich der Dimensionsstabilität ergaben sich gemäß EN 1107-2 die Werte in Längsrichtung - 0,07 % und in Querrichtung - 0,07 %.

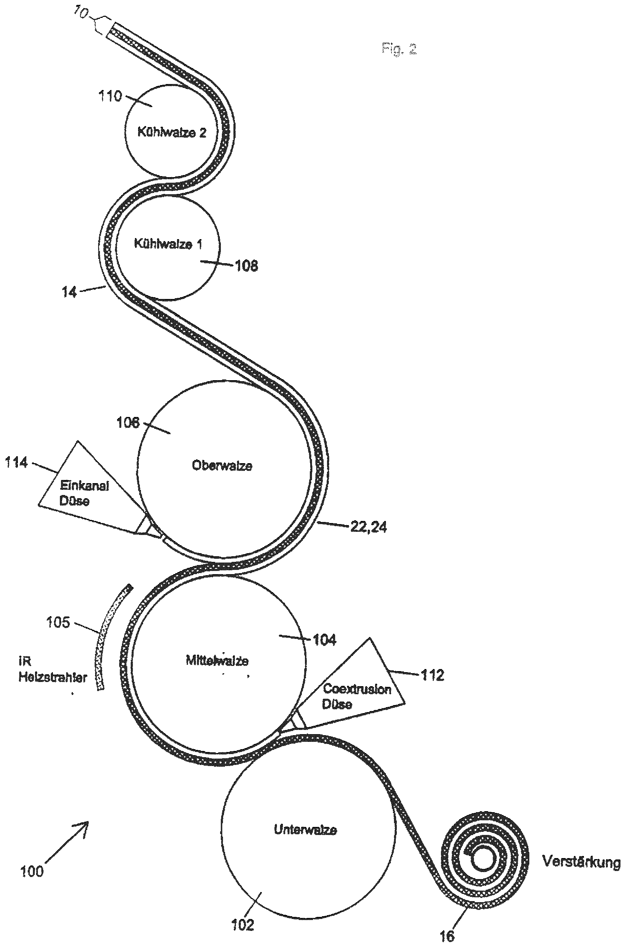

In der Fig. 2 ist ein Glättgestell 100 rein prinzipiell dargestellt, mit der eine erfindungsgemäße Dichtungsbahn 10 im Extrusions- oder Kalandrierverfahren hergestellt werden kann.

Das Glättgestell 100 umfasst eine untere Rolle oder Walze 102, eine mittlere Rolle oder Walze 104 sowie eine obere Rolle oder Walze 106. Ferner sind im Ausführungsbeispiel zwei Kühlwalzen 108, 110 vorgesehen.

Das Glättgestell 100 weist des Weiteren eine Coextrusionsdüse 112 sowie eine Einkanalextrusionsdüse 114 auf, die jeweils mit einem entsprechenden Extruder verbunden sind.

Zur Herstellung der Dachbahn 10 wird die Kombinationsträgereinlage 16 von einem Wickel abgezogen und zwischen den Rollen oder Walzen 102, 104, 106 geführt. Im

Bereich der unteren und der mittleren Walze 102, 104, bevor die Kombinationsträgereinlage 16 zwischen diesen Walzen 104 und 106 hindurchgeführt wird, werden mittels der Coextrusionsdüse 112 die mittlere Schicht 22 und die äußere Schicht 24 als Einheit auf die mittlere Walze 104 aufgetragen. Mit der freien Oberfläche wird die Kombinationsträgereinlage 16 kontaktiert.

Nach dem Durchtritt durch die untere und mittlere Walze 102, 104 wird z.B. mit einem IR-Heizstrahler 105 Wärme in Richtung der mittleren Walze 104 appliziert. Auf die obere Walze 106 wird die untere Schicht 14 mittels einer Extrusionsdüse 114 aufgetragen. Die Kombinationsträgeranlage 16 wird beim Hindurchfördern durch den zwischen der mittleren Walze 104 und der oberen Walze 106 vorhandenen Spalt vor dem Spalt mit der freien Oberfläche der unteren Schicht 14 kontaktiert. Die so hergestellte Dachbahn 10 wird um die obere Walze 106 und schließlich durch die Kühlwalzen 108 und 110 geführt.

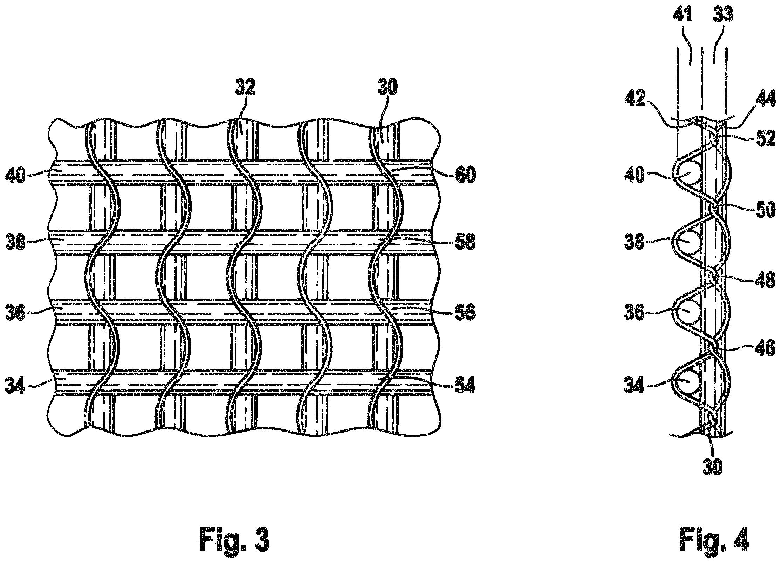

Den Fig. 3 und 4 sind Ansichten des Glasgewirkes 18 zu entnehmen, das aus sich kreuzenden Längsfäden 30, 32 und Querfäden 34, 36, 38, 40 besteht. Die Fäden verlaufen dabei jeweils in einer gesonderten Ebene, so dass die Längsfäden 30, 32 in einer ersten Ebene 33 und die Querfäden 34, 36, 38, 40 in einer zweiten Ebene 41 vorliegen. Die jeweiligen Fäden bilden Lagen.

Die Längs- und Querfäden 30, 32, 34, 36, 38, 40 werden mittels Bindefäden 42, 44 verbunden, wobei im Bereich der Kreuzungspunkte 54, 56, 58, 60 zwischen den Längs- und Querfäden 30, 32, 34, 36, 38, 40 erste Bindefäden 42 ausschließlich oberhalb und zweite Bindefäden 44 ausschließlich unterhalb der Kreuzungspunkte 54, 56, 58, 60 verlaufen, so dass sich die Kreuzungspunkte 54, 56, 58, 60 zwischen den ersten und zweiten Bindefäden 42, 44 befinden, wie sich aus einem Vergleich der Draufsicht gemäß Fig. 3 und des Schnitts gemäß Fig. 4 selbsterklärend ergibt. Des Weiteren ist den Figuren prinzipiell zu entnehmen, dass die Bindefäden 42, 44 in einem nahezu gleichen Punkt 44, 46, 48, 50 mit den Längsfäden 30, 32 verbunden sind.

Entlang jeden Längsfadens 30, 32 verlaufen somit zwei Bindefäden, von denen einer abschnittsweise oberhalb der Lage 41 und der andere abschnittsweise unterhalb der Lage 33 verläuft, um die Verbindung zwischen den Längs- und Querfäden 30, 32, 34, 36, 38, 40 sicherzustellen. Durch die Stärke der Bindefäden 42, 44 wird auch die Festigkeit der Kombinationsträgeranlage 16 und damit der Dichtungsbahn 10 beeinflusst.

Durch den Einsatz der Kombinationsträgereinlage 16 werden bei der Extrusion der unteren Schicht 14 die beiden anderen bereits extrudierten Schichten - mittlere Schicht 22 und die äußere Schicht 24 - vor einem erneuten hohen Wärmeeintrag geschützt. Dies wirkt sich positiv auf die Alterung der mittleren Schicht 22 und der äußeren Schicht 24 aus. Dies kann mittels des Yellownes Index nachgewiesen werden.

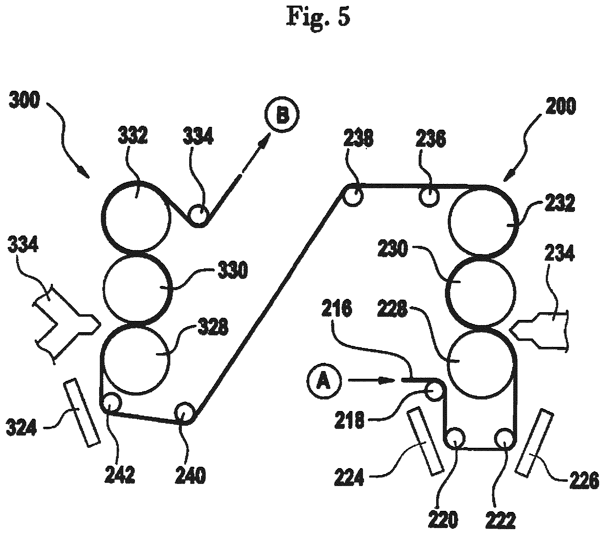

In Figur 5 wird das Verfahren unter Berücksichtigung zweier Glättgestelle dargestellt.

So wird in einem eine erfindungsgemäße Kombinationsträgereinlage 216 z. B. von einem Wickel kommend (Punkt A) über Umlenkrollen 218, 220, 222 an Wärmequellen, wie IR-Heizstrahlern 224, 226, vorbeigeführt, um sodann zwischen Walzen 228, 230, 232 geführt zu werden. Zwischen den Walzen 228, 230 wird über eine Einkanaldüse 234 eine Schicht aufgetragen, die die Schicht 14 gemäß Fig. 1 bildet, die folglich bei der fertigen Dichtungsbahn 10 beim Abdecken eines Bauwerks bzw. eines Abschnitts bzw. Bereichs eines solchen diesem zugewandt ist bzw. auf diesem aufliegt.

Die Walzen 228, 230 232 bilden ein erstes Glättgestell 200. Von dem Glättgestell 200 wird die Kombinationsträgereinlage 216 mit der aufgetragenen Schicht über Umlenkwalzen 236, 238, 240, 242 einem zweiten Glättgestell 300 zugeführt. Zuvor erfolgt ein erneutes Erwärmen mittels einer Wärmequelle, wie IR-Heizstrahler 324. Sodann erfolgt ein Führen durch Walzen 328, 330, 332, die als Unter-, Mittel- und Oberwalze zu bezeichnen sind. Zwischen der Unterwalze 328 und der Oberwalze 330 werden über eine Koextrusionsdüse 334 - entsprechend der Schicht 22, 24 nach Fig. 1 - die Mittelschicht 22 und die äußere, also bei der fertigen Dichtungsbahn 10 bauwerkfernliegenden Schicht 24 aufgetragen.

Von dem Glättgestell 300 kommend wird die Dachbahn über eine Umlenkwalze 334 z. B. nicht dargestellten Kühlwalzen (Bereich B) zugeführt. Eine weitere Bearbeitung kann erfolgen, insbesondere ein Aufwickeln bzw. Ablängen. Die Walze 332 kann bereits als Kühlwalze - genau sowie die Umlenkwalze 334 - ausgebildet sein

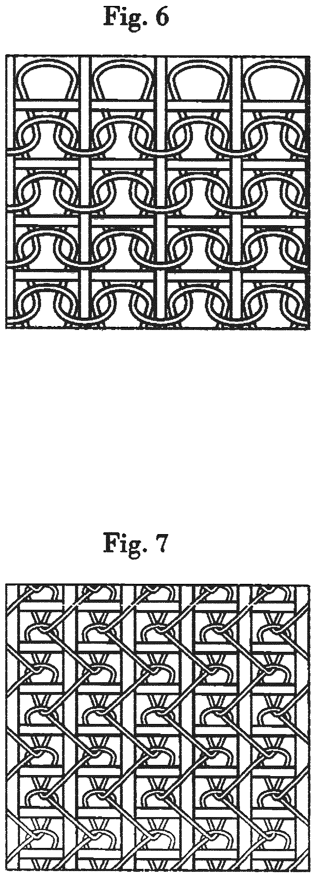

In Fig. 6 bis 9 werden bevorzugte Ausführungsformen der Maschenware bzw. der biaxialen Maschenware rein speziell dargestellt. Biaxial bedeutet in diesem Fall, dass Längs- bzw. Querfäden bzw. Schuss- und Kettfäden im 90°- oder auch 45°-Winkel zueinander angeordnet sind.

Fig. 6 stellt ein Gestricke dar, wobei die eingelegten Kett- bzw. Schussfäden im 0° bzw. 90° Winkel angeordnet sind.

Fig. 7 stellt ein Gewirke dar, welches dem Fachmann als "Half Tricot" bekannt ist. In dieser Ausführungsform sind die eingewebten Kett- bzw. Schussfäden im 0° bzw. 90° Winkel zueinander angeordnet.

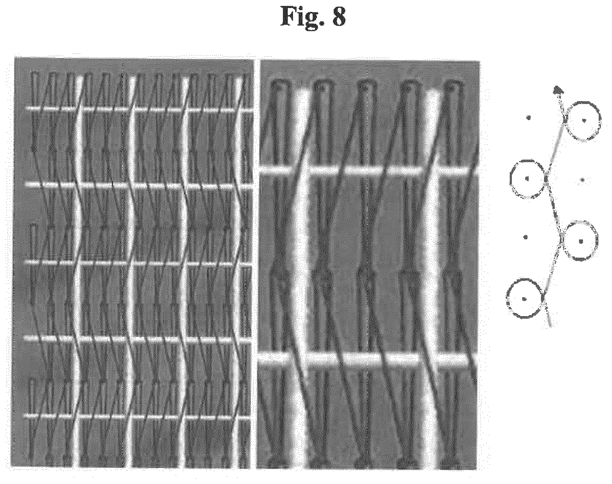

Fig. 8 stellt ebenfalls ein Gewirke dar, welches - wie bereits zur Fig. 7 erwähnt - dem Fachmann als "Half Tricot" bekannt ist. Hierbei unterscheidet sich jedoch die Anzahl der Maschen, welche zwischen den Schuss- bzw. Kettfäden angeordnet sind.

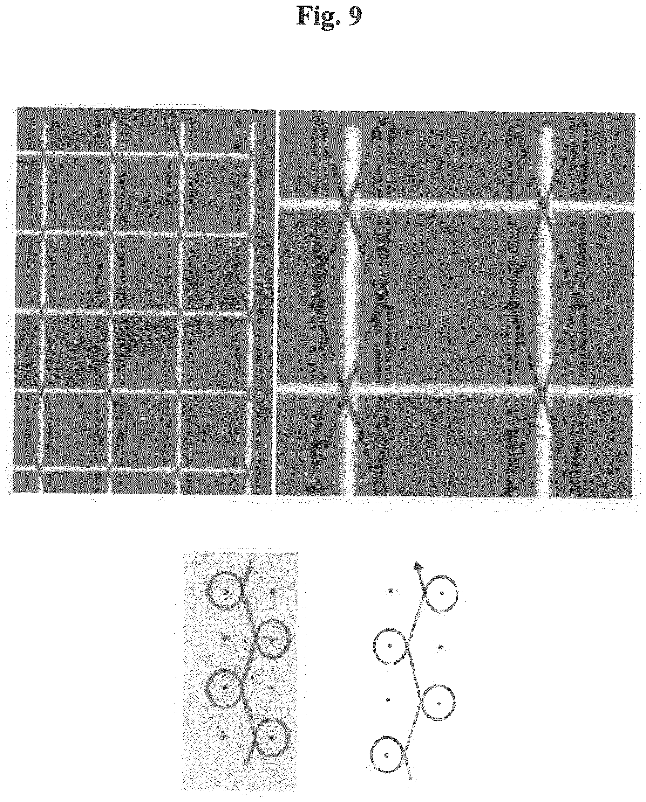

Fig. 9 zeigt ein weiteres Ausführungsbeispiel für ein Gewirke, das dem Fachmann als "Full Tricot" bekannt ist. Hierbei setzt sich die Struktur aus zwei "Half Tricot" Ausführungen zusammen, wobei mittels zweier Führungsschienen während der Herstellung produziert wird und sich diese in entgegengesetzter Richtung bewegen. Das bedeutet, dass eine ausgewogene Struktur entsteht. Die beiden Kettfäden werden in entgegengesetzter Richtung überlappt (im Englischen als "overlap" bezeichnet). Dies führt zu perfekten aufrechten Schleifen in der Oberfläche.

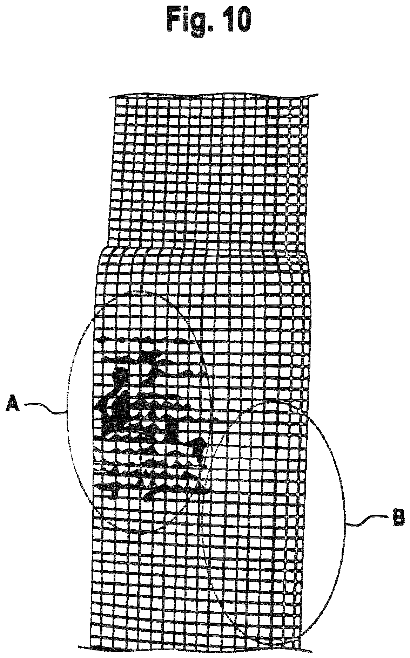

In Fig. 10 werden beispielsweise zwei Flächen dargestellt, um den Mechanismus der Haftung zwischen den Außenschichten sowie der Kombinationsträgereinlage zu verdeutlichen. So zeigt der Bereich A eine Fläche, welche keine ausreichende Haftungsfestigkeit der einzelnen Außenschichten mit der Kombinationsträgereinlage darstellt. Die Fläche B kennzeichnet hingegen einen Bereich guter Haftungseigenschaften. Dies wird dadurch erkennbar, dass die obere sowie die untere Außenschicht verschiedenfarbig eingefärbt sind. Während des Produktionsprozesses müssen die Materialien der Außenschichten die offenen Poren bzw. die offenen Bereiche der Kombinationsträgereinlage füllen bzw. diese durchdringen, damit die Außenschichten sich berühren. Da beide Außenschichten erwärmt sind und auf dem gleichen Polymergrundmaterial beruhen, kann eine hohe Haftungsfestigkeit zwischen beiden Schichten erreicht werden. Um die Haftung zur Kombinationsträgereinlage zu verbessern, kann ein Bindemittel eingesetzt werden.

Somit ist die Fläche A auf zwei eventuelle Möglichkeiten der schlechten Haftung zurückzuführen: eine nicht homogene bzw.- schlechte Durchdringbarkeit der Kombinationsträgereinlage durch die Materialien der Außenschichten bzw. ggf. der bauwerkseitig verlaufenden Außenschicht und der Zwischenschicht (Schicht 22 in Fig. 1) und/oder einer ungenügenden Menge bzw. unzureichende Oberflächenverteilung des aufgebrachten Bindemittels.

## Patentansprüche

1. Mehrschichtige Dichtungsbahn (10) für einen Bauwerkbereich, wie Dach, Fassade, Keller, Decken, die äußere Schichten (14, 22, 24), die ein Grundpolymer in Form von Polyvinylchlorid oder ein Polyvinylchlorid-Copolymer und einen Weichmacher enthalten, sowie zwischen den äußeren Schichten vorhandene Kombinationsträgereinlage (16) aufweist, die ein Glasvlies (20) und eine Glasverstärkung aufweist, die aus einer Maschenware (18) besteht oder diese enthält.

2. Mehrschichtige Dichtungsbahn nach Anspruch 1,
**dadurch gekennzeichnet,**
**dass** die Kombinationsträgereinlage (16) mit den äußeren Schichten (14, 22, 24) mittels eines Bindemittels verbunden ist, dessen Gewichtsanteil in Prozent insbesondere zwischen 5 und 50 beträgt, bezogen auf die Summe der Gewichte von Bindemittel und Kombinationsträgereinlage.

3. Mehrschichtige Dichtungsbahn nach Anspruch 1 oder 2,
**dadurch gekennzeichnet,**
**dass** die Fäden der Maschenware (18) Längs- und Querfäden (30, 32, 34, 36, 38, 40) aufweisen, die über Bindefäden (42, 44) verbunden sind, wobei vorzugsweise die Längsfäden (30, 32) eine erste Lage (33) und die Querfäden (34, 36, 38, 40) eine zweite Lage (41) bilden, die Längsfäden und die Querfäden durch erste und zweite Bindefäden (42, 44) verbunden sind, die ihrerseits fixiert von den Längsfäden ausgehen, und dass im Bereich der Kreuzungspunkte (54, 56, 58, 60) zwischen den Längsfäden und Querfäden die ersten Bindefäden (42) ausschließlich oberhalb und die zweiten Bindefäden (44) ausschließlich unterhalb der Kreuzungspunkte in deren Bereichen derart verlaufen, dass die Kreuzungspunkte zwischen den ersten und zweiten Bindefäden verlaufen, und insbesondere die Bindefäden (42, 44) in oder nahezu in gleichen Punkten (44, 46, 48, 50) mit den Längsfäden (30, 32) verbunden sind.

4. Mehrschichtige Dichtungsbahn nach Anspruch 1 oder 2,
**dadurch gekennzeichnet,**
**dass** die Maschenware (18) ein Gestricke oder ein Gewirke oder eine Kombination dieser ist.

5. Mehrschichtige Dichtungsbahn nach zumindest einem der vorhergehenden Ansprüche,
**dadurch gekennzeichnet,**
**dass** die Glasverstärkung mit dem Glasvlies (20) mittels zumindest einem Bindemittel aus der Gruppe Styrol-Butadien, Acrylat, EVA (EthylenVinylacetat), PVC basierende Variante, wie PVC Dispersionen, PVC Plastisole, verbunden ist.

6. Mehrschichtige Dichtungsbahn nach zumindest einem der vorhergehenden Ansprüche,
**dadurch gekennzeichnet,**
**dass** die Bindefäden (42, 44) und/oder Fäden (30, 32, 34, 36, 38, 40) der Maschenware (18) eine Feinheit zwischen 2 tex und 20 tex, insbesondere 4 tex und 10 tex, aufweisen.

7. Mehrschichtige Dichtungsbahn nach zumindest einem der vorhergehenden Ansprüche,
**dadurch gekennzeichnet,**
**dass** der Bindefaden (42, 44) bzw. Faden (30, 32, 34, 36, 38, 40) aus einem Material aus der Gruppe Polyester, Polypropylen, Polyamid, Glas besteht.

8. Dichtungsbahn nach zumindest einem der vorhergehenden Ansprüche,
**dadurch gekennzeichnet,**
**dass** das Glasvlies (20) ein Flächengewicht zwischen 30 g/m² und 90 g/m² und/oder die Glasfasern des Glasvlieses eine Dicke zwischen 13 µm und 18 µm aufweisen.

9. Dichtungsbahn nach zumindest einem der vorhergehenden Ansprüche,
**dadurch gekennzeichnet,**
**dass** die sich über einen rechten Winkel schneidenden Fasern der Schuss- und Kettfäden (30, 32, 34, 36, 38, 40) der Maschenware (18) eine Verlegedichte von 2x2 bis 6x6, insbesondere 3x3 bis 4x4, aufweisen, wobei insbesondere die Feinheit der Schuss- und/oder Kettfäden (30, 32, 34, 36, 38, 40) der Maschenware (18) 60 tex bis 80 tex beträgt.

10. Dichtungsbahn nach zumindest einem der vorhergehenden Ansprüche,
**dadurch gekennzeichnet,**
**dass** der Weichmacher ein niedermolekularer Weichmacher ist, wobei insbesondere der Anteil des niedermolekularen Weichmachers in den das Grundpolymer enthaltenden äußeren Schichten (14, 22, 24) zwischen 25 Gew.-% und 45 Gew.-% liegt, besonders bevorzugt der Anteil an niedermolekularem Weichmacher zwischen 25 Gew.-% und 37 Gew.-%, insbesondere zwischen 27 Gew.-% und 35 Gew.-%, liegt.

11. Dichtungsbahn nach Anspruch 10,
**dadurch gekennzeichnet,**
**dass** der niedermolekulare Weichmacher ein Weichmacher auf der Basis von Phthalat, insbesondere aus der Gruppe DPHP (Dipropylheptylphthalat) DINP (Diisonylphthalat), DIDP (Diisodecylphthalat), oder ein phthalatfreier Weichmacher oder ein zumindest (teilweise) biobasierter Weichmacher ist.

12. Dichtungsbahn nach zumindest einem der vorhergehenden Ansprüche,
**dadurch gekennzeichnet,**
**dass** die Kombinationsträgereinlage (16) mit einem Binder auf der Basis zumindest eines Materials aus der Gruppe Styrol-Butadien, Acrylat, PVC, EVA insbesondere Styrol-Butadien, imprägniert ist.

13. Dichtungsbahn nach zumindest einem der vorhergehenden Ansprüche,
**dadurch gekennzeichnet,**
**dass** die Dichtungsbahn (10) ein Flächengewicht zwischen 1,4 kg/m² und 2,6 kg/m², insbesondere zwischen 1,5 kg/m² und 1,9 kg/m², aufweist, und/oder dass die Dicke der Dichtungsbahn (10) zwischen 1,0 mm und 2,5 mm, insbesondere zwischen 1,2 mm und 2,0 mm, liegt, und/oder dass die Zugfestigkeit der Dichtungsbahn (10) in N/50mm in Längsrichtung mindestens 800, vorzugsweise mindestens 1000, insbesondere 1150 bis 1250, und/oder in Querrichtung mindestens 800, vorzugsweise 1100 bis 1200, beträgt, und/oder dass die Dichtungsbahn (10) eine Weiterreißfestigkeit in N in Längsrichtung der Dichtungsbahnen zwischen 170 und 250 und in Querrichtung zwischen 210 und 300 aufweist.

14. Dichtungsbahn nach zumindest einem der vorhergehenden Ansprüche,
**dadurch gekennzeichnet,**
**dass** das Glasvlies (20) entlang bauwerkbereichsabgewandter Außenseite der Maschenware (18) verläuft.

15. Dichtungsbahn nach zumindest einem der vorhergehenden Ansprüche,
**dadurch gekennzeichnet,**
**dass** die Dichtungsbahn (10) eine oder mehrere Additive aus der Gruppe Füllstoffe, Pigmente, Farbstoffe, UV-Stabilisatoren, Thermostabilisatoren, Biozide enthält.

16. Dichtungsbahn nach zumindest einem der vorhergehenden Ansprüche,
**dadurch gekennzeichnet,**
**dass** die Dichtungsbahn (10) aus einer bauwerkbereichseitig verlaufenden ersten äußeren Schicht (14), der Kombinationsträgereinlage (16) sowie zumindest einer entlang bauwerkbereichabgewandter Seite der Kombinationsträgereinlage verlaufenden äußeren Schicht (22, 24) besteht, wobei insbesondere entlang bauwerkbereichabgewandter Seite der Kombinationsträgereinlage (16) zwei Schichten, eine Zwischenschicht (22) und die äußere Schicht (24), angeordnet sind.

17. Dichtungsbahn nach zumindest einem der vorhergehenden Ansprüche,
**dadurch gekennzeichnet,**
**dass** die bauwerkabgewandt verlaufende Außenschicht (26) und/oder die Zwischenschicht (22) und/oder die bauwerkseitig verlaufende Schicht (14), insbesondere jede Schicht (14, 22, 24), besteht aus oder enthält in Gew.-%:
| | |
|---|---|
| niedermolekularer Weichmacher vorzugsweise auf Phthalat-Basis | 25- 45, insbesondere 27 - 37 |
| Prozesshilfe/n wie Gleitmittel | 0 - 1,9, insbesondere 1,0 - 1,9 |
| Füllstoff wie Calciumcarbonat | 0 - 20, insbesondere 0 - 15 |
| PVC | 45 - 57, insbesondere 46 - 56 |
| Antioxidant bzw. Antioxidantien | 0 - 0,2, insbesondere 0,1 - 0,2 |
| UV-Stabilisator | 0 - 0,23, insbesondere 0,1 - 0,23 |
| sonstige Stabilisierungsmittel | 1,5 - 1,8 |
| Farbpigmente außer TiO₂ | 0 - 0,14, insbesondere 0,905 - 0,10 |
| Titandioxid | 1,0 - 12, insbesondere 1 - 8 |

18. Verfahren zur Herstellung einer Dichtungsbahn (10) nach zumindest einem der vorhergehenden Ansprüche,
**dadurch gekennzeichnet,**
**dass** die äußeren Schichten (14, 24) durch Extrusion hergestellt werden und sodann mit der Kombinationsträgereinlage (16) verbunden werden.

19. Verfahren zur Herstellung einer Dichtungsbahn (10) nach zumindest einem der Ansprüche 1 bis 18,
**dadurch gekennzeichnet,**
**dass** durch Coextrusion die bei verlegter Dichtungsbahn (10) entlang bauwerkbereichabgewandter Seite der Kombinationsträgereinlage (16) verlaufenden Schichten (22, 34) hergestellt werden und dass die coextrudierten Schichten, die Kombinationsträgereinlage und die durch Extrusion hergestellten bauwerkbereichseitig verlaufende Schicht (14) in einem einzigen Glättgestell miteinander verbunden werden.

20. Verfahren zur Herstellung einer Dichtungsbahn (10) nach zumindest einem der Ansprüche 1 bis 18,
**dadurch gekennzeichnet,**
**dass** in einem ersten Glättgestell (200) auf die diesem zugeführte Kombinationsträgereinlage (16) die bei verlegter Dichtungsbahn (10) bauwerkbereichsseitig verlaufende Außenschicht (14) durch Extrusion aufgetragen wird, dass die Kombinationsträgereinlage mit der Außenschicht einem zweiten Glättgestell (300) zugeführt wird, in dem durch Koextrusion die bei verlegter Dichtungsbahn bauwerkbereichabgewandte Zwischen- und Außenschicht (22, 24) aufgetragen werden.

## Claims

1. Multi-layer sealing web (10) for a building area, such as roof, facade, cellar, ceilings, which has outer layers (14, 22, 24) which contain a base polymer in the form of polyvinyl chloride or a polyvinyl chloride copolymer and a plasticizer, as well as a combination carrier insert (16) which is present between the outer layers and has a glass fleece (20) and a glass reinforcement which consists of or contains a knitted fabric (18).

2. Multi-layer sealing web according to claim 1,
**characterized in that**,
that the combination carrier liner (16) is bonded to the outer layers (14, 22, 24) by means of a binder, the percentage by weight of which is in particular between 5 and 50, based on the sum of the weights of the binder and the combination carrier liner.

3. Multi-layer sealing web according to claim 1 or 2,
**characterized in that**,
**in that** the threads of the knitted fabric (18) have longitudinal and transverse threads (30, 32, 34, 36, 38, 40) which are connected via binding threads (42, 44), the longitudinal threads (30, 32) preferably forming a first layer (33) and the transverse threads (34, 36, 38, 40) form a second layer (41), the longitudinal threads and the transverse threads are connected by first and second binding threads (42, 44), which in turn extend in a fixed manner from the longitudinal threads, and that in the region of the crossing points (54, 56, 58, 60) between the longitudinal threads and the transverse threads, the first binding threads (42) run exclusively above and the second binding threads (44) run exclusively below the crossing points in the regions thereof in such a way that the crossing points run between the first and second binding threads, and in particular the binding threads (42, 44) are connected to the longitudinal threads (30, 32) at or almost at the same points (44, 46, 48, 50).

4. Multi-layer sealing web according to claim 1 or 2,
**characterized in that**,
that the knitted fabric (18) is a weft-knitted or warp-knitted fabric or a combination thereof.

5. Multi-layer sealing web according to at least one of the preceding claims,
**characterized in that**,
that the glass reinforcement is bonded to the glass fleece (20) by means of at least one binder from the group styrene-butadiene, acrylate, EVA (ethylene-vinyl acetate), PVC-based variant, such as PVC dispersions, PVC plastisols.

6. Multi-layer sealing web according to at least one of the preceding claims,
**characterized in that**,
that the binding threads (42, 44) and/or threads (30, 32, 34, 36, 38, 40) of the knitted fabric (18) have a fineness of between 2 tex and 20 tex, in particular 4 tex and 10 tex.

7. Multi-layer sealing web according to at least one of the preceding claims,
**characterized in that**,
that the binding thread (42, 44) or thread (30, 32, 34, 36, 38, 40) consists of a material from the group polyester, polypropylene, polyamide, glass.

8. Sealing web according to at least one of the preceding claims,
**characterized in that**,
that the glass fleece (20) has a weight per unit area of between 30 g/m² and 90 g/m² and/or the glass fibers of the glass fleece have a thickness of between 13 µm and 18 µm.

9. Sealing web according to at least one of the preceding claims,
**characterized in that**,
that the fibers of the weft and warp threads (30, 32, 34, 36, 38, 40) of the knitted fabric (18), which intersect at a right angle, have a laying density of 2x2 to 6x6, in particular 3x3 to 4x4, the fineness of the weft and/or warp threads (30, 32, 34, 36, 38, 40) of the knitted fabric (18) in particular being 60 tex to 80 tex.

10. Sealing web according to at least one of the preceding claims,
**characterized in that**,
that the plasticizer is a low-molecular plasticizer, in particular the proportion of the low-molecular plasticizer in the outer layers (14, 22, 24) containing the base polymer being between 25% by weight and 45% by weight, particularly preferably the proportion of low-molecular plasticizer being between 25% by weight and 37% by weight, in particular between 27% by weight and 35% by weight.

11. Sealing web according to claim 10,
**characterized in that**,
that the low molecular weight plasticizer is a phthalate-based plasticizer, in particular from the group DPHP (dipropyl heptyl phthalate) DINP (diisonyl phthalate), DIDP (diisodecyl phthalate), or a phthalate-free plasticizer or an at least (partially) bio-based plasticizer.

12. Sealing web according to at least one of the preceding claims,
**characterized in that**,
that the combination carrier insert (16) is impregnated with a binder based on at least one material from the group styrene-butadiene, acrylate, PVC, EVA, in particular styrene-butadiene.

13. Sealing web according to at least one of the preceding claims,
**characterized in that**,
that the sealing web (10) has a weight per unit area of between 1.4 kg/m² and 2.6 kg/m², in particular between 1.5 kg/m² and 1.9 kg/m², and/or that the thickness of the sealing web (10) is between 1.0 mm and 2.5 mm, in particular between 1.2 mm and 2.0 mm, and/or that the tensile strength of the sealing web (10) in N/50 mm in the longitudinal direction is at least 800, preferably at least 1000, in particular 1150 to 1250, and/or in the transverse direction is at least 800, preferably 1100 to 1200, and/or that the sealing web (10) has a tear propagation strength in N in the longitudinal direction of the sealing web between 170 and 250 and in the transverse direction between 210 and 300.

14. Sealing web according to at least one of the preceding claims,
**characterized in that**,
that the glass fleece (20) runs along the outer side of the knitted fabric (18) facing away from the construction area.

15. Sealing web according to at least one of the preceding claims,
**characterized in that**,
that the sealing web (10) contains one or more additives from the group consisting of fillers, pigments, dyes, UV stabilizers, thermostabilizers, biocides.

16. Sealing web according to at least one of the preceding claims,
**characterized in that**,
**in that** the sealing web (10) comprises a first outer layer (14) extending on the side of the construction site, the combination carrier insert (16) and at least one outer layer (22, 24) extending along the side of the combination carrier insert facing away from the construction site, two layers, an intermediate layer (22) and the outer layer (24), being arranged in particular along the side of the combination carrier insert (16) facing away from the construction site.

17. Sealing web according to at least one of the preceding claims,
**characterized in that**,
that the outer layer (26) facing away from the building and/or the intermediate layer (22) and/or the layer (14) facing the building, in particular each layer (14, 22, 24), consists of or contains in % by weight:
| | |
|---|---|
| Low molecular weight plasticizer, preferably phthalate-based | 25- 45, in particular 27 - 37 |
| Process aid/s such as lubricant | 0 - 1,9, in particular 1,0 - 1,9 |
| Filler such as calcium carbonate | 0 - 20, in particular 0 - 15 |
| PVC | 45 - 57, in particular 46 - 56 |
| Antioxidant or antioxidants | 0 - 0,2, in particular 0,1 - 0,2 |
| UV stabilizer | 0 - 0,23, in particular 0,1 - 0,23 |
| Other stabilizers | 1,5 - 1,8 |
| Color pigments except TiO₂ | 0 - 0,14, in particular 0,905 - 0,10 |
| Titanium dioxide | 1,0 - 12, in particular 1 - 8 |

18. Method of manufacturing a sealing web (10) according to at least one of the preceding claims,
**characterized in that**
that the outer layers (14, 24) are produced by extrusion and then bonded to the combination carrier insert (16).

19. Method of manufacturing a sealing web (10) according to at least one of claims 1 to 18,
**characterized in that**,
that the layers (22, 34) running along the side of the combination carrier insert (16) facing away from the construction area when the sealing web (10) is laid are produced by coextrusion and that the coextruded layers, the combination carrier insert and the layer (14) running along the side of the construction area produced by extrusion are joined together in a single smoothing frame.

20. Method of manufacturing a sealing web (10) according to at least one of claims 1 to 18,
**characterized in that**,
that in a first smoothing frame (200), the outer layer (14), which runs on the side of the building structure when the sealing web (10) is laid, is applied by extrusion to the combination carrier insert (16) fed thereto, that the combination carrier insert with the outer layer is fed to a second smoothing frame (300), in which the intermediate layer and the outer layer (22, 24), which face away from the building structure when the sealing web is laid, are applied by coextrusion.

## Revendications

1. Bande d'étanchéité multicouches (10) pour une zone d'ouvrage, telle que toit, façade, cave, plafond, qui présente des couches extérieures (14, 22, 24) qui contiennent un polymère de base sous forme de polychlorure de vinyle ou un copolymère de polychlorure de vinyle et un plastifiant, ainsi qu'une garniture combinée de support (16) placée entre les couches extérieures, laquelle présente un feutre de verre (20) et un renforcement en fibres de verre qui est constitué d'une marchandise à mailles (18) ou contient celle-ci.

2. Bande d'étanchéité multicouches selon la revendication 1,
**caractérisée en ce**
**que** la garniture combinée de support (16) est reliée aux couches extérieures (14, 22, 24) au moyen d'un liant dont le pourcentage en poids s'élève notamment entre 5 et 50, par rapport à la somme des poids du liant et de la garniture combinée de support.

3. Bande d'étanchéité multicouches selon la revendication 1 ou 2,
**caractérisée en ce**
**que** les fils de la marchandise à mailles (18) présentent des fils longitudinaux et transversaux (30, 32, 34, 36, 38, 40) qui sont reliés par des fils de liage (42, 44), sachant que de préférence, les fils longitudinaux (30, 32) forment une première couche (33) et les fils transversaux (34, 36, 38, 40) une seconde couche (41), que les fils longitudinaux et les fils transversaux sont reliés par des premiers et seconds fils de liage (42, 44) qui, eux mêmes fixés, partent des fils longitudinaux, et que dans la zone des points de croisement (54, 56, 58, 60) entre les fils longitudinaux et les fils transversaux, les premiers fils de liage (42) s'étendent exclusivement au-dessus des points de croisement et les seconds fils de liage (44) exclusivement en dessous dans leurs zones de sorte que les points de croisement s'étendent entre les premiers et les seconds fils de liage, et que notamment les fils de liage (42, 44) sont reliés aux fils longitudinaux (30, 32) aux mêmes points (44, 46, 48, 50) ou presque aux mêmes.

4. Bande d'étanchéité multicouches selon la revendication 1 ou 2,
**caractérisée en ce**
**que** la marchandise à mailles (18) est un tricot ou un tissu à mailles ou une combinaison des deux.

5. Bande d'étanchéité multicouches selon au moins l'une des revendications précédentes,
**caractérisée en ce**
**que** le renforcement en fibres de verre est relié au feutre de verre (20) au moyen d'au moins un liant appartenant au groupe styrène-butadiène, acrylate, EVA (éthylène/acétate de vinyle), variante basée sur du PVC, telles que dispersions de PVC, plastisols PVC.

6. Bande d'étanchéité multicouches selon au moins l'une des revendications précédentes,
**caractérisée en ce**
**que** les fils de liage (42, 44) et/ou les fils (30, 32, 34, 36, 38, 40) de la marchandise à mailles (18) présente une finesse comprise entre 2 tex et 20 tex, notamment 4 tex et 10 tex.

7. Bande d'étanchéité multicouches selon au moins l'une des revendications précédentes,
**caractérisée en ce**
**que** le fil de liage (42, 44) ou le fil (30, 32, 34, 36, 38, 40) est constitué d'un matériau appartenant au groupe polyester, polypropylène, polyamide, verre.

8. Bande d'étanchéité selon au moins l'une des revendications précédentes,
**caractérisée en ce**
**que** le feutre de verre (20) présente un poids surfacique compris entre 30 g/m² et 90 g/m² et/ou que les fibres de verre du feutre de verre présentent une épaisseur comprise entre 13 µm et 18 µm.

9. Bande d'étanchéité selon au moins l'une des revendications précédentes,
**caractérisée en ce**
**que** les fibres des fils de trame et de chaîne (30, 32, 34, 36, 38, 40) de la marchandise à mailles (18) se recoupant à angle droit présentent une densité de pose de 2x2 à 6x6, notamment de 3x3 à 4x4, sachant que notamment la finesse des fils de trame et/ou de chaîne (30, 32, 34, 36, 38, 40) de la marchandise à mailles (18) est comprise entre 60 tex et 80 tex.

10. Bande d'étanchéité selon au moins l'une des revendications précédentes,
**caractérisée en ce**
**que** le plastifiant est un plastifiant à faible poids moléculaire, sachant que notamment la part du plastifiant à faible poids moléculaire dans les couches extérieures (14, 22, 24) contenant le polymère de base est comprise entre 25 % et 45 % en poids, que, notamment de préférence, la part du plastifiant à faible poids moléculaire est comprise entre 25 % et 37 % en poids, notamment entre 27 % et 35 % en poids.

11. Bande d'étanchéité selon la revendication 10,
**caractérisée en ce**
**que** le plastifiant à faible poids moléculaire est un plastifiant à base de phtalate, notamment appartenant au groupe DPHP (phtalate de dipropyle-heptyle), DINP (phtalate de diisononyle), DIDP (phtalate de diisodécyle), ou un plastifiant sans phtalate ou un plastifiant au moins (partiellement) biosourcé.

12. Bande d'étanchéité selon au moins l'une des revendications précédentes,
**caractérisée en ce**
**que** la garniture combinée de support (16) est imprégnée d'un liant à base d'au moins un matériau du groupe styrène-butadiène, acrylate, PVC, EVA, notamment styrène-butadiène.

13. Bande d'étanchéité selon au moins l'une des revendications précédentes,
**caractérisée en ce**
**que** la bande d'étanchéité (10) présente un poids surfacique compris entre 1,4 kg/m² et 2,6 kg/m², notamment entre 1,5 kg/m² et 1,9 kg/m², et/ou que l'épaisseur de la bande d'étanchéité (10) est comprise entre 1,0 mm et 2,5 mm, notamment entre 1,2 mm et 2,0 mm, et/ou que la résistance à la traction de la bande d'étanchéité (10) en N/50 mm s'élève au moins à 800 en sens longitudinal, de préférence au moins 1000, notamment de 1150 à 1250, et/ou au moins 800 dans le sens transversal, de préférence de 1100 à 1200, et/ou que la bande d'étanchéité (10) présente une résistance au déchirement en N qui est comprise entre 170 et 250 dans le sens longitudinal des bandes d'étanchéité et entre 210 et 300 dans le sens transversal.

14. Bande d'étanchéité selon au moins l'une des revendications précédentes,
**caractérisée en ce**
**que** le feutre de verre (20) s'étend le long du côté extérieur opposé à la zone d'ouvrage, de la marchandise à mailles (18).

15. Bande d'étanchéité selon au moins l'une des revendications précédentes,
**caractérisée en ce**
**que** la bande d'étanchéité (10) contient un ou plusieurs additifs du groupe des matières de charge, pigments, colorants, stabilisateurs aux UV, thermostabilisateurs, biocides.

16. Bande d'étanchéité selon au moins l'une des revendications précédentes,
**caractérisée en ce**
**que** la bande d'étanchéité (10) se compose d'une première couche extérieure (14) s'étendant du côté de la zone d'ouvrage, de la garniture combinée de support (16) ainsi qu'au moins une couche extérieure (22, 24) s'étendant le long du côté opposé à la zone d'ouvrage, de la garniture combinée de support, sachant que notamment deux couches, une couche intermédiaire (22) et la couche extérieure (24) sont disposées le long du côté opposé à la zone d'ouvrage, de la garniture combinée de support (16).

17. Bande d'étanchéité selon au moins l'une des revendications précédentes,
**caractérisée en ce**
**que** la couche extérieure (26) s'étendant du côté opposé à l'ouvrage et/ou la couche intermédiaire (22) et/ou la couche (14) s'étendant du côté de l'ouvrage, notamment chaque couche (14, 22, 24), se composent de ou contiennent les éléments suivants en % en poids :
| | |
|---|---|
| Plastifiant de faible poids moléculaire, de préférence à base de phtalate | 25- 45, notamment 27 - 37 |
| Adjuvant(s) de traitement tel qu'agent antifriction | 0 - 1,9, notamment 1,0 - 1,9 |
| Agent de charge tel que carbonate de calcium | 0 - 20, notamment 0 - 15 |
| PVC | 45 - 57, notamment 46 - 56 |
| Antioxydant(s) | 0 - 0,2, notamment 0,1 - 0,2 |
| Stabilisateur UV | 0 - 0,23, notamment 0,1 - 0,23 |
| Autres agents de stabilisation | 1,5 - 1,8 |
| Pigments colorés, excepté le TiO₂ | 0 - 0,14, notamment 0,905 - 0,10 |
| Dioxyde de titane | 1,0 - 12, notamment 1 - 8 |

18. Procédé de fabrication d'une bande d'étanchéité (10) selon au moins l'une des revendications précédentes,
**caractérisé en ce**
**que** les couches extérieures (14, 24) sont fabriquées par extrusion et reliées ensuite à la garniture combinée de support (16).

19. Procédé de fabrication d'une bande d'étanchéité (10) selon au moins l'une des revendications 1 à 18,
**caractérisé en ce**
**que** les couches (22, 34) s'étendant le long du côté opposé à la zone d'ouvrage, de la garniture combinée de support (16) quand la bande d'étanchéité (10) est posée, sont fabriquées par coextrusion et que les couches coextrudées, la garniture combinée de support et la couche (14) s'étendant du côté de la zone d'ouvrage, fabriquée par extrusion sont reliées les unes aux autres dans une seule lisseuse.

20. Procédé de fabrication d'une bande d'étanchéité (10) selon au moins l'une des revendications 1 à 18,
**caractérisé en ce**
**que** dans une première lisseuse (200), la couche extérieure (14) s'étendant du côté de la zone d'ouvrage, quand la bande d'étanchéité (10) est posée, est appliquée par extrusion sur la garniture combinée de support (16) fournie à ladite lisseuse, que la garniture combinée de support avec la couche extérieure est fournie à une seconde lisseuse (300) dans laquelle la couche intermédiaire et la couche extérieure (22, 24) opposées à la zone d'ouvrage, quand la bande d'étanchéité est posée, sont appliquées par coextrusion.
